# FASCICULE DE BREVET EUROPEEN

(11) **EP 1 233 614 B1**
(45) Date de publication et mention de la délivrance du brevet: **08.08.2012**
(21) Numéro de dépôt: 02075597.1
(22) Date de dépôt: 14.02.2002
(51) Int. Cl.: H04N 5/445, H04N 7/52

(54) **Système de transmission et de traitement vidéo pour générer une mosaique utilisateur**
System zur Videoübertragung und Videoverarbeitung, um ein Benutzermosaik zu erzeugen
System for video transmission and processing generating a user mosaic

(30) Priorité: 16.02.2001 FR 0102137
(43) Date de publication de la demande: 21.08.2002
(73) Titulaire: C.H.I. Development Mgmt. Ltd. XXIX, LLC, Wilmington, DE 19808 (US)
(72) Inventeur: Martin, Francois, 75008 Paris (FR)
(74) Mandataire: Kazi, Ilya

(56) Documents cités:
- EP-A- 1 021 039
- EP-A1- 0 910 214
- WO-A-98/56176
- WO-A-99/43158
- WO-A-99/57891
- WO-A1-98/26596
- US-A- 5 633 683
- US-A- 5 822 014
- US-A- 6 005 562
- EHRMANTRAUT M ET AL: "THE PERSONAL ELECTRONIC PROGRAM GUIDE - TOWARDS THE PRE-SELECTION OF INDIVIDUAL TV PROGRAMS" PROCEEDINGS OF THE INTERNATIONAL CONFERENCE ON INFORMATION AND KNOWLEDGE MANAGEMENT CIKM, ACM, NEW YORK, NY, US, 12 novembre 1996 (1996-11-12), pages 243-250, XP002071337

## Description

L'invention concerne un système de transmission vidéo et un système de traitement vidéo pour respectivement transmettre un ensemble de signaux vidéo sur un canal de communication, et d'autre part traiter ces dits signaux vidéo afin d'améliorer leur manipulation par un téléspectateur.

Cette invention peut être notamment mise en oeuvre d'une part dans des systèmes de transmission vidéo utilisés au niveau des diffuseurs de programmes de télévision (TV) et au niveau des fournisseurs de services vidéo pour télévision, et d'autre part au niveau d'un téléspectateur dans un système de réception et de traitement de signaux vidéo TV.

Avec l'émergence de la télévision numérique, le nombre de programmes TV qu'un utilisateur peut visualiser sur son poste de télévision a considérablement augmenté. Pour faire face à cet accroissement de programmes TV et permettre à l'utilisateur de choisir parmi cet ensemble de programmes TV, une représentation réduite appelée "mosaïque" a été créée, cette mosaïque consistant en une juxtaposition sur le poste de télévision de l'utilisateur desdits programmes TV préalablement réduits. L'utilisateur peut ainsi voir simultanément le contenu d'un ensemble de programmes TV, ce qui l'aide à sélectionner un programme TV particulier.

Le brevet US publie sous le numéro US-A-5633683 décrit un système de sélection d'un programme TV parmi un ensemble de programmes TV. Le procédé correspondant comprend la transmission d'un ensemble de signaux vidéo, d'un signal vidéo représentant une mosaïque obtenue à partir dudit ensemble de signaux vidéo, et d'informations reliant la position de chaque vidéo de taille réduite constituent ladite mosaïque à un numéro de programme dont elle est issue. A la réception, l'utilisateur sélectionne son programme TV en sélectionnant dans la mosaïque le programme vidéo de taille réduite qui l'intéresse, le programme sélectionné correspondant replaçant alors ladite mosaïque sur le poste de télévision.

WO9856176 décrit une méthode pour naviguer à travers des programmes de télévision. Un récepteur de télévision affiche une image mosaïque, avec des sous-images représentant les différents programmes disponibles. Le récepteur reçoit en outre un guide électronique des programmes avec les descriptions de programmes. Dés l'activation d'un bouton "thème," le spectateur peut entrer dans un type de programme souhaité, par exemple "film". En réponse, la luminosité de sous-images représentant les programmes qui ne sont pas souhaités est réduite. L'utilisateur est donc aidé à naviguer à travers des programmes d'intérêt tout en conservant la structure en mosaïque avec laquelle est familier, sans perdre l'association entre les canaux et leurs positions sur l'écran mosaïque.

WO9826596 décrit un système de prévisualisation activée à partir d'un guide de programmation, qui affiche à l'écran une prévisualisation de la vidéo d'un programme sélectionné Le clip de prévisualisation vidéo est affichée sur l'écran inférieur de sorte que le clip de prévisualisation est vidéo hautement compressé pour économiser la bande passante.

US6005562 décrit une technique pour transmettre et recevoir un guide de programme électronique qui identifie les programmes qui doivent être transmis. Les données electronic Program Guide (EPG) comprend des données d'image représentant des images de taille réduite, inférieure à la normale, pour identifier les programmes respectifs qui doivent être transmis, Les données EPG sont combinées avec les données des différents programmes vidéo et les données combinées sont transmises. A la réception, les données EPG sont séparées à partir des données reçues et les images de taille réduite, inférieure à la taille normale, représentée par les données EPG sont affichées en superposition sur le programme reçu.

EP0910214 décrit un premier ensemble de données numériques qui sont obtenues par le codage des signaux basse résolution vidéo numérique par un codeur de compression à basse révolution et un deuxième ensemble de données numériques qui sont obtenues par le codage des signaux haute résolution vidéo numérique par un encodeur de compression à haute résolution. Les données sont multiplexées avec un paquet incluant des informations d'identification permettant d'identifier les deux ensembles de données numériques. A la réception, les premiers et deuxièmes ensembles sont identifiées et reproduits par les décodeurs correspondants. Donc, lorsque les données vidéo avec des résolutions différentes sont multiplexés et transmis, ils peuvent être correctement reproduits sur le côté réception, de sorte que le degré de liberté de la programmation peut être amélioré.

Le procédé de transmission et de réception d'un signal vidéo représentant une mosaïque mise en oeuvre dans le document de l'art antérieur présente un certain nombre de limitations.

Tout d'abord, ce procédé se heurte au problème du nombre maximum de programmes TV de format réduit que peut contenir une mosaïque. En effet, chaque programme TV de taille réduite devant avoir un format suffisamment grand pour que l'utilisateur puisse apprécier son contenu, une mosaïque visualisée sur un poste de télévision de format standard ne pourra raisonnablement pas contenir plus que 16 programmes de taille réduite (4 programmes horizontalement × 4 programmes verticalement). Dans le cas où l'utilisateur a la possibilité de choisir un programme TV parmi un ensemble relativement large de programmes TV, le nombre de programmes TV étant notamment supérieur à 16, une mosaïque ne suffira pas à visualiser ledit ensemble de programmes TV. L'utilisateur devra donc sélectionner un programme TV parmi une pluralité de mosaïques, l'obligeant à passer d'une mosaïque à une autre sur son poste de télévision, rendant ainsi la sélection d'un programme TV difficile et contraignante.

D'autre part, la mosaïque créée selon ce procédé est une représentation exhaustive et uniforme d'un ensemble de programmes TV. En effet, lors de la création de la mosaïque, chaque programme TV de taille réduite est juxtaposé sans prendre en considération la nature de son contenu. Ainsi, lorsque l'utillsateur désir sélectionner un programme TV particulier sur la mosaïque, il doit regarder les uns après les autres chaque programme de taille réduite afin de trouver celui dont le contenu répond à ses attentes. La sélection par un utilisateur d'un programme TV particulier est donc lente et peut s'avérer peu fiable dans la mesure où le programme de taille réduite ne reflète pas en permanence le genre ou le style du programme TV auquel il se rapporte.

L'Invention a pour but de remédier dans une large mesure à ces limitations en proposant un système de transmission et de réception pour signaux vidéo relatifs à des programmes TV, pour permettre à un utilisateur la sélection rapide et pertinente d'un programme TV particulier parmi une mosaïque de programmes TV affichée sur son poste de télévision.

Les caractéristiques de l'invention sont indiqués par les revendications.

Selon un aspect de l'invention, il est preévu un système de transmission vidéo pour transmettre sur un canal de communication un signal vidéo de sortie à partir d'un ensemble de signaux vidéo d'entrée, ledit système comprenant un premier, ensemble de moyens de codage pour délivrer un signal vidéo codé selon la norme MPEG-2 de chaque signal vidéo d'entrée,
caractérisé en ce qu'il comprend aussi :
- un second ensemble de moyens de codage pour délivrer un signal vidéo sous-échantillonné et codé selon la norme MPEG-4 pour chacun desdits signaux vidéo d'entrée;
- des moyens d'association pour associer à chaque signal vidéo sous-échantillonné et codé selon la norme MPEG-4 un descripteur comprenant un champ identificateur et un champ filtrage caractérisant le signal vidéo d'entrée correspondant, suivant son genre;
- des moyens de multiplexage pour multiplexer l'ensemble desdits signaux vidéo codés selon la norme MPEG-2, avec l'ensemble desdits signaux vidéo sous-échantillonnés et codé selon la norme MPEG-4 associés à leur descripteur, ce multiplexage délivrant ledit signa! vidéo de sortie.

Ce système de transmission concerne plus particulièrement les diffuseurs de programmes TV situés au début de la chaîne de transmission vers les utilisateurs. Dans ce système, un ensemble de signaux vidéo d'entrée correspondant à des programmes TV sont codés de façon à délivrer un ensemble de signaux vidéo codés pour notamment réduire la bande passante de chacun d'entre eux. Parallèlement, les signaux vidéo d'entrée sont aussi codés de façon à délivrer un ensemble de signaux vidéo codés, ce codage incluant également une réduction du format de chaque signal vidéo d'entrée par sous-échantillonnage. Des descripteurs de données sont alors associées à chaque signal vidéo sous-échantillonné pour le caractériser par un ensemble de champs tels que son genre, un numéro de programme ou différentes données décrivant son contenu. Un multiplexage des signaux vidéo codés et des données associés est ensuite effectué pour délivrer un signal envoyé sur un canal de communication à destination d'un utilisateur.

Dans ce système de transmission, contrairement au document de l'art antérieur, aucun signal de mosaïque n'est créé à partir des signaux vidéo sous-échantillonnés, laissant ainsi toute possibilité de composition d'une mosaïque à partir de ces signaux vidéo sous-échantillonnés à leur réception au niveau de l'utilisateur.

Selon un autre aspect de l'invention II est prévu un système de transmission vidéo pour transmettre sur un canal de communication un signal vidéo de sortie à partir d'un signal vidéo d'entrée, ledit signal vidéo d'entrée résultant du multiplexage d'un ensemble de signaux vidéo codés selon la norme MPEG-2, ledit système comprenant des moyens de démultiplexage pour générer lesdits signaux vidéo codés selon la norme MPEG-2,
caractérisé en ce qu'il comprend aussi :
- des moyens de transcodage pour délivrer un signal vidéo sous-échantillonné et codé selon la norme MPEG-4 pour chacun desdits signaux vidéo codé selon la norme MPEG-2,
- des moyens d'association pour associer à chaque signal vidéo sous-échantillonné et codé selon la norme MPEG-4 un descripteur comprenant un champ identificateur et un champ filtrage caractérisant le signal vidéo codé correspondant, suivant son genre;
- des moyens de multiplexage pour multiplexer ledit signal vidéo d'entrée, avec l'ensemble desdits signaux vidéo sous-échantillonnés et codé selon la norme MPEG-4 associés à leur descripteur, ce multiplexage délivrant ledit signal vidéo de sortie.

Dans ce système de transmission, les signaux d'entrée correspondent à des signaux vidéo codés multiplexés relatifs à des programmes TV. Après démultiplexage, ces signaux vidéo codés sont transcodés de façon à délivrer un nouvel ensemble de signaux vidéo codés, le transcodage incluant également une réduction du format de chaque signal vidéo d'entrée par sous-échantillonnage. De façon similaire au système de transmission précédent, des descripteur de données sont associées à chaque signal vidéo sous-échantillonné. Un multiplexage des signaux vidéo codés et des données associées est ensuite effectué pour délivrer une signal unique envoyé sur une canal de communication à destination d'un utilisateur.

De même, aucun signal de mosaïque n'est créé à partir des signaux vidéo sous-échantillonnés, laissant ainsi toute possibilité de composition d'une mosaïque à partir de ces signaux vidéo sous-échantillonnés à leur réception au niveau de l'utilisateur.

L'encodage des signaux vidéo sous-échantillonnés sont codés selon la norme MPEG-4. Cela permet une grande flexibilité quant à la leur manipulation dès lors que chaque signal vidéo sous-échantillonné devient un objet vidéo manipulé en tant que tel,

Selon un aspect de l'invention, il est prévu un système de traitement vidéo pour notamment recevoir, via un canal de communication, un signal vidéo d'entrée résultat du multiplexage d'un ensemble de signaux vidéo codés selon la norme MPEG-2, ledit système comprenant des moyens de démultiplexage pour générer lesdits signaux vidéo codés, des moyens de décodage pour décoder lesdits signaux vidéo codés et générer des signaux vidéo décodés visualisables sur un écran,
caractérisé en ce qu'il comprend aussi :
- des moyens de réception d'un signal auxiliaire résultant des multiplexage d'un ensemble de signaux vidéo sous-échantillonnés et codé salon la norme MPEG-4, chaque signal vidéo sous-échantillonné et codé selon la norme MPEG-4 résultant du sous-échantillonnage et codage d'un signals vidéo codé selon la norme MPEG-2, un descripteur de données étant associé à chaque signal sous-échantillonné et codé selon la norme MPEG-4 pour le caractériser par un ensemble de champs, comprenant une champ identificateur et un champ filtrage caractérisant le signal vidéo codé, suivant son genre:
- des moyens de création d'une base de données pour stocker les champs desdits descripteurs de données, et identifier un signal vidéo sous-échantillonné et codé selon la norme MPEG-4 au moyen d'une requête partant sur un ensemble de champs;
- des moyens de création d'une représentation mosaïque à partir d'un ensemble limité de signaux vidéo sous-échantilionnés et codé selon la norme MPEG-4 sélectionnés parmi ledit ensemble de signaux vidéo sous-échantillonnés et codé selon la norme MPEG-4. lesdits signaux vidéo sous-échantillonnés et codé selon la norme MPEG-4 sélectionnés correspondant aux signaux vidéo sous-échantillonnés et codé selon la norme MPEG-4 dont les champs des descripteurs associés sont le résultat d'une requête utilisateur, envoyée à ladite base de données.

Ce système de tracement vidéo est dédié à la réception et au traitement d'un signal vidéo d'entrée correspondant au signal vidéo de sortie généré par l'un des systèmes de transmission vidéo mentionné ci-dessus.

Contrairement au document de antérieur où une mosaïque de programmes est rèalisée avec l'ensemble des signaux vidéo sous-échantilionnés, ce système de traitement a pour objet la création d'une mosaïque utilisateur à partir d'un ensemble limité de signaux vidéo sous-échantillonnés, permettant à un utilisateur la sélection rapide d'un programme TV particulier parmi une mosaïque unique de programmes TV.

De plus, contrairement au document de l'art antérieur où la mosaïque de programmes TV est imposée à l'utilisateur, ce système de traitement selon l'invention permet à l'utilisateur de composer la mosaïque à partir de signaux vidéo sous-échantillonnés dont le programme TV correspondant est en adéquation avec ses goûts ou son profil, facilitant ainsi son choix.

Il est également prévu un récepteur pour poste de télévision comportant un système de réception et de traitement vidéo présenté ci-dessus.

L'invention porte également sur un signal numérique composé d'un ensemble de signaux vidéo primaires codés selon la norme MPEG-2. Ce signal est caractéristique en ce qu'il reflète les caractéristiques techniques des systèmes de transmission présentés ci-dessus. En effet, ce signal comprend aussi un ensemble de signaux vidéo secondaires codés selon la norme MPEG-4, chaque signal vidéo secondaire étant obtenu successivement par sous-échantillonnage d'un signal vidéo primaire puis par encodage selon la norme MPFG-4, chaque signal vidéo MPEG-4 étant associé à un descripteur caractérisant le signal vidéo primaire correspondant, et comprennant un champ identificateur et un champ filtrage suivant son genre.

L'invention porte également sur un produit programme d'ordinateur pour systèmes de transmission vidéo tels que présentés ci-dessus, ainsi qu'un produit programme d'ordinateur pour système de traitement vidéo tel que présenté ci-dessus, lesdits programmes d'ordinateur comprenant une suite d'instructions de code de programme pour l'exécution des différentes étapes de traitement de l'invention par un processeur de signal.

Ces aspects de l'invention ainsi que d'autres aspects plus détaillés apparaîtront plus clairement grâce à la description suivante, faite en regard des dessins d'annexés, le tout donné à titre d'exemple non limitatif, dans lesquels:
La figure 1 représente un premier mode de réalisation d'un système de transmission vidéo selon l'invention,
La figure 2 représente un second mode de réalisation d'un système de transmission vidéo selon l'invention,
La figure 3 représente un mode de réalisation détaillé d'un système de réception et de traitement vidéo selon l'invention,
La figure 4 représente une vue schématique d'un système de réception et de traitement vidéo selon l'invention,
La figure 5 illustre un système de réception et de traitement selon invention.

Les explications suivantes sont données en considérant que les signaux vidéo correspondant aux programmes TV affichés sur le poste de télévision de l'utilisateur, lorsqu'ils sont codés, le sont selon la norme MPEG-2 ISO/IEC 13818-2, mais il est évident pour l'homme du métier que l'invention peut également être mise en oeuvre de la même manière lorsque ces signaux vidéo sont codés selon d'autres normes vidéo telle que la norme MPEG-1.
De même, par souci de clarté, les explications sont données en ne considérant que quatre programmes TV. L'invention ne se limite bien sûr pas à ce nombre restreint de programmes et peut être mise en oeuvre avec un nombre de programmes TV supérieur.

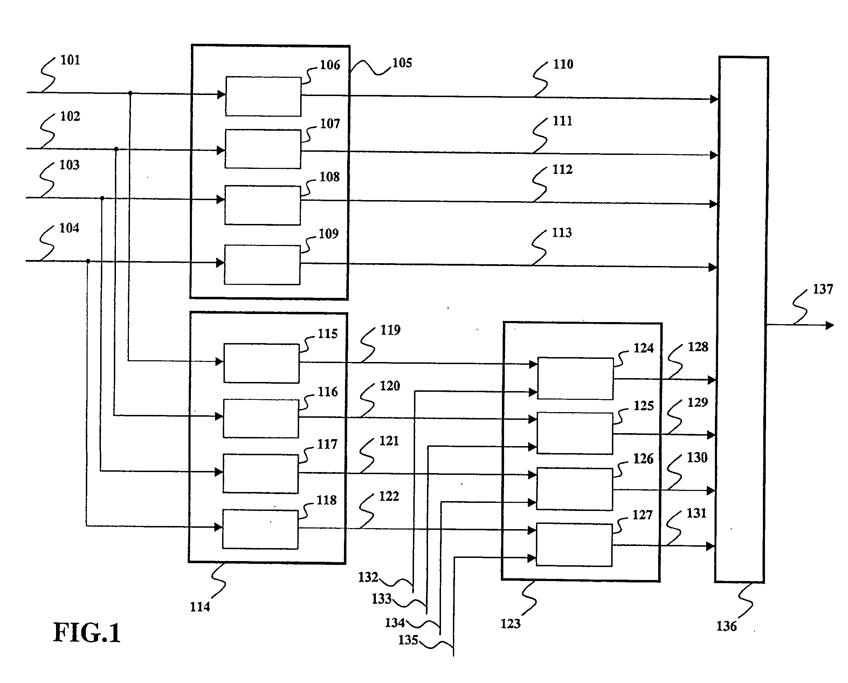

La figure 1 représente un premier mode de réalisation d'un système de transmission vidéo selon l'invention. Ce mode de réalisation est mis en oeuvre dans le cas où la transmission est faite au niveau d'un diffuseur de programmes TV.
Ce système de transmission reçoit un ensemble de quatre programmes TV via les signaux vidéo 101-104 provenant par exemple d'un système d'acquisition vidéo (non représenté). Ces signaux 101-104, de format brut, sont appliqués à un système d'encodage vidéo 105 dans lequel chacun des signaux 101-104 est respectivement encodé au moyen des encodeurs vidéo 106-109, résultant dans les signaux 110-113 encodés selon la norme MPEG-2. Parallèlement, les signaux 101-104 sont appliqués à un système d'encodage vidéo 114 dans lequel chacun des signaux 101-104 est respectivement sous-échantillonné puis encodé au moyen des encodeurs vidéo 115-118 selon la norme MPEG-4 ISO-IEC 14496-2, résultant dans les signaux 119-122. Le sous-échantillonnage a pour but de générer des signaux vidéo 119-122 ayant un format réduit par rapport au format des signaux 101-104. Le facteur de sous-échantillonnage peut prendre différentes valeurs. Par exemple, un sous-échantillonnage horizontal et vertical d'un facteur 4 appliqué sur des signaux 101-104 ayant un format CCIR permettra de générer des signaux 119-122 ayant un format QCIF, tandis qu'un sous-échantillonnage horizontal et vertical d'un facteur 8 appliqué sur des signaux 101-104 ayant un format CCIR permettra de générer des signaux 119-122 ayant un format SUB-QCIF. De la valeur du facteur de sous-échantillonnage dépend le nombre maximum de signaux vidéo sous-échantillonnés affichables sur un même écran. Par des moyens d'association 123, des descripteurs de données 132-135, issus par exemple d'une base de données non représentée, sont associés aux signaux 119-122. Les moyens d'association 123 sont composés de 4 ensembles 124-127 permettant chacun d'attacher ou de mettre en relation un descripteur de données avec un signal vidéo sous-échantillonné, résultant ainsi dans de nouveaux signaux 128-131. Ces descripteurs de données permettent, au moyen d'un ensemble de champs, de caractériser chacun des signaux sous-échantillonnés 119-122, et par la même occasion chacun des programmes TV 101-104 desquels les signaux 119-122 sont issus.
Le tableau 1 décrit de façon non limitative les champs contenus dans chaque descripteur de données associé à un signal sous-échantillonné. Chaque descripteur de données comprend un ensemble de champs regroupés en plusieurs sous-ensembles :
- un sous-ensemble "identification" comprenant un champ identificateur référencé 1. Ce champ a pour but d'identifier chaque descripteur de façon à ce qu'aucune confusion ne soit faite avec les autres descripteurs.
- un sous-ensemble "filtrage" comprenant deux champs référencés 2 et 3 pour classer le programme TV suivant son genre avec un degré croissant de raffinement, le genre de niveau 2 précisant le genre de niveau 1. Par exemple, le genre de niveau 1 peut être choisi parmi les genres (film, documentaire). Si le genre de niveau 1 est (film), le genre de niveau 2 est choisi parmi (drame, comédie, aventure). Si le genre de niveau 1 est (documentaire), le genre de niveau 2 est choisi parmi (science, histoire, nature).
- un sous-ensemble "description" comprenant les champs référencés 4, 5, 6 et 7. Ces champs permettent d'apporter des indications complémentaires sur le programme TV quant à son contenu. Le champ 7 permet de relier chaque signal sous-échantillonné 119-122 au programme TV correspondant porté par l'un des signaux vidéo 101-104.

**TABLEAU 1**

| | Numéro du champ |
|---|---|
| **DESCRIPTEUR_PROG_TV** | |
| **(** | |
| **IDENTIFICATION** | |
| id | 1 |
| **FILTRAGE** | |
| genre niveau 1 | 2 |
| genre niveau 2 | 3 |
| **DESCRIPTION** | |
| titre | 4 |
| producteur | 5 |
| durée | 6 |
| numéro de chaîne | 7 |
| ) | |

Les descripteurs de données 132-135 associés aux signaux vidéo sous-échantillonnés sont construits suivant la syntaxe normative DVB-SI (de l'anglais Digital Video Broadcast-Service Information) telle que décrite dans le document "Digital Broadcasting Systems for Television, Sound and Data Services; Specification for Service Information (SI) in Digital Video Broadcasting (DVB) Systems", ITU-Radiocommunication study groups, Docll-3/45-E, 29 Août 1996. Cependant, d'autres syntaxes de construction des descripteurs peuvent être envisagées, telle qu'une syntaxe selon la norme MPEG-7 permettant de définir des champs de façon libre pour obtenir un degré de description plus pointu de chaque programme TV. De même, les descripteurs selon l'invention peuvent être construits selon la norme MPEG-4 si chaque programme TV est davantage décrit par des caractéristiques techniques vidéo tels que la forme des objets ou des motifs qui le composent.
Après multiplexage, dans un flux transport intermédiaire (non représenté), des signaux 110-113 au moyen d'un multiplexeur 136 selon la norme MPEG-2 Système 13818-1, les signaux 128-131 sont encapsulés et multiplexés toujours au moyen de 136 dans ledit flux transport intermédiaire selon l'Amendement 7 de la norme MPEG-2 Système 13818-1, pour résulter en un signal de sortie 137 transmis sur un canal de communication.

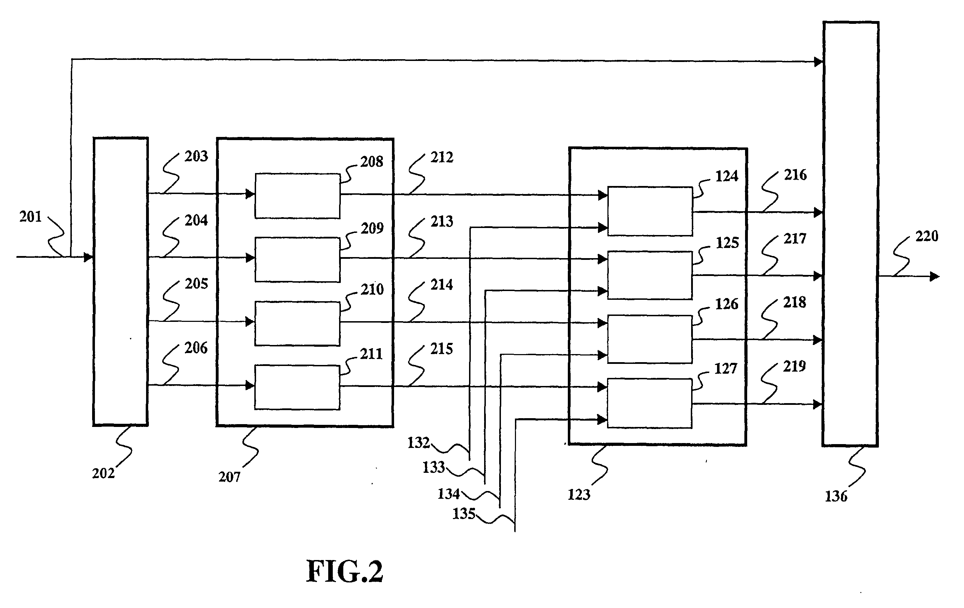

La figure 2 représente un second mode de réalisation d'un système de transmission vidéo selon l'invention. Ce mode de réalisation est mis en oeuvre dans le cas où la transmission est faite au niveau d'un fournisseur de services vidéo.
Dans ce cas, un flux transport 201 comprenant 4 signaux vidéo encodés selon la norme MPEG-2 et multiplexés est reçu. Les 4 signaux vidéo encodés sont extraits du flux transport 201 et démultiplexés par le démultiplexeur 202, résultant dans les signaux vidéo 203-206. Ces 4 signaux 203-206 vidéo encodés selon la norme MPEG-2 subissent une opération de transcodage 207 pour générer des signaux vidéo encodés selon la norme MPEG-4. Cette opération de transcodage inclut 4 transcodeurs 208-211 permettant de générer les signaux vidéo 212-215 encodés selon la norme MPEG-4. Outre ce changement de syntaxe de codage, chaque transcodeur effectue un sous-échantillonnage des signaux 203-206 de façon identique au mode de réalisation selon la figure 1. Cette opération de transcodage 207 peut être faite de plusieurs façons. Tout d'abord, elle peut consister en un décodage MPEG-2 des signaux 203-206 de façon à accéder à des données vidéo non codées, un encodage MPEG-4 étant alors effectué sur ces données vidéo non codées pour générer les signaux vidéo 212-215. Cependant, cette opération nécessite des moyens de traitement coûteux, si bien qu'une opération consistant à manipuler directement les signaux 203-206 sans décodage préalable sera préférée. De façon identique au mode de réalisation selon la figure 1, des descripteurs de données 132-135 sont associés aux signaux vidéo sous-échantillonnés 212-215 de façon à générer les signaux 216-219. Dans une dernière opération, le flux transport 201 et les signaux 216-219 sont multiplexés et encapsulés dans un nouveau flux transport au moyen du multiplexeur 136, résultant dans le signal de sortie 220 transmis sur un canal de communication.

Dans les systèmes de transmission vidéo décrits précédemment, il peut être envisagé que les signaux vidéo sous-échantillonnés encodés selon la norme MPEG-4 aient une fréquence d'images inférieure à celle des signaux vidéo correspondant aux programmes TV. Ainsi, en générant des signaux 119-122 ou des signaux 212-215, respectivement lors de l'encodage 114 ou du transcodage 207, ayant une faible fréquence d'images, la bande passante du signal 220 de sortie est réduite. A l'extrême, il est à remarquer que si la fréquence d'image de ces signaux est nulle, un programme TV est représenté par une seule image.

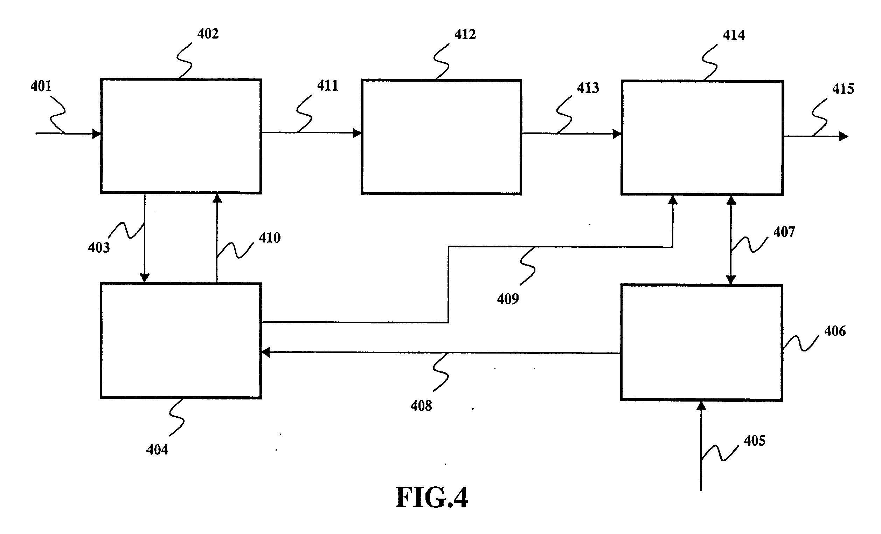

La figure 4 est une vue schématique d'un système de réception et de traitement vidéo selon l'invention. Ce système de réception et de traitement vidéo est conçu pour recevoir et traiter le signal de sortie généré par un des systèmes de transmission précédemment décrit par les figures 1 ou 2. Il a pour objet la création d'une mosaïque utilisateur à partir d'un ensemble limité de signaux vidéo sous-échantillonnés, permettant à un utilisateur la sélection rapide d'un programme TV particulier parmi une mosaïque unique de programmes TV affichée sur son poste de télévision.
Ce système de réception comprend un démultiplexeur 402 pour démultiplexer le signal d'entrée 401 afin de générer d'une part les signaux vidéo 411 composés des programmes TV encodés selon la norme MPEG-2 et des signaux vidéo sous-échantillonnés encodés selon la norme MPEG-4, et d'autre part les descripteurs de données 403 permettant de décrire le contenu de chaque programme TV. Une base de données 404 est alors constituée à partir des différents champs de chaque descripteurs. Suite à une action 405, via l'interface utilisateur 406, générée par un utilisateur situé au niveau du système de réception, et consistant à choisir un genre de programme TV dans un menu textuel ou graphique affiché sur le poste de télévision, une requête 408 reprenant le choix de l'utilisateur est générée et envoyée à la base de données 404. En réponse à cette requête, la base de donnée détermine quels sont les programmes TV correspondant au choix de l'utilisateur, et, via la commande 410, autorise le démultiplexage des signaux vidéo sous-échantillonnés issus de ces programmes TV déterminés. Cet ensemble limité de signaux vidéo sous-échantillonnés est alors décodé par l'ensemble de décodage 412 composé notamment de décodeurs selon la norme MPEG-4 afin de délivrer des signaux vidéo sous-échantillonnés décodés 413. Ces signaux vidéo sont alors assemblés sous forme de mosaïque au moyen d'un compositeur d'image 414, cet assemblage consistant en une juxtaposition des signaux vidéo sous-échantillonnés dans un même plan d'image. La mosaïque 415 ainsi créée est envoyée vers un système d'affichage tel que le poste de télévision de l'utilisateur. Des données descriptives 409 de chaque signal vidéo sous-échantillonné peuvent également être insérées dans la mosaïque lors de sa composition. L'utilisateur dispose donc d'une mosaïque représentant un ensemble de programmes TV de format réduit correspond à son choix. Il peut ainsi aisément sélectionner un programme TV de format réduit dans la mosaïque via la commande 407, ce qui entraîne le démultiplexage par 402 et le décodage par 412 du programme TV correspondant encodé selon la norme MPEG-2, ce dernier étant alors affiché sur l'écran de télévision de l'utilisateur.

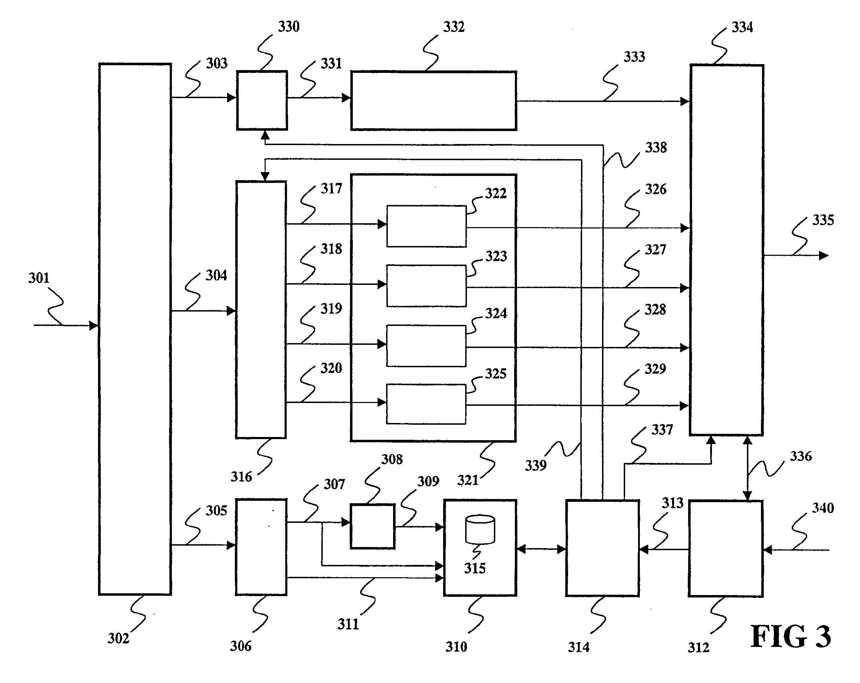

La figure 3 représente un mode de réalisation détaillé d'un système de réception et de traitement vidéo tel qu'illustré schématiquement par la figure 4 selon l'invention.
Ce système de réception et de traitement vidéo est conçu pour recevoir et traiter le signal d'entrée 301 correspondant au signal de sortie généré par un des systèmes de transmission précédemment décrit par les figures 1 ou 2. Ce signal 301 correspond à un flux transport. Il est dans un premier temps démultiplexé par le démultiplexeur 302 afin de générer un flux transport 303 contenant les 4 programmes TV encodés selon la norme MPEG-2, un flux de transport 304 contenant les 4 signaux vidéo sous-échantillonnés encodés selon la norme MPEG-4, ainsi qu'un signal 305 contenant les 4 descripteurs de données associés aux 4 signaux sous-échantillonnés. Le signal 305 est analysé au moyen d'un analyseur de table 306 ayant pour but de délivrer d'une part l'ensemble des champs 307 de chaque descripteur de données, mais également des paramètres 311 d'identification de programmes (PID) permettant de faire le lien entre un signal vidéo sous-échantillonné et le programme TV correspondant. Un extracteur de descripteur 308 permet de lire et d'extraire à partir du signal 307 les informations de genre 309 renseignées par les champs numéro 2 et 3 du tableau 1. Une base de données 315, de préférence de type relationnel, est alors créée par le générateur de base de données 310, chaque cellule de cette base de données étant remplie à partir des données véhiculées par les signaux 307, 309 et 311. L'utilisateur, via l'interface utilisateur 312, par un choix 340 dans un menu (non représenté) généré et affiché sur son poste de télévision reprenant l'intitulé des différents champs de filtrage des descripteurs, sélectionne un intitulé dans ledit menu correspondant au genre de programmes TV qu'il souhaite regarder. Une requête 313 reflétant le choix de l'utilisateur est alors générée. Le contenu de cette requête est analysé par l'analyseur de requête 314 pour analyser le choix utilisateur contenu dans la requête, notamment quel genre de programme il a choisi. L'analyseur de requête 314 consulte alors la base de données 315 afin de déterminer, parmi tous les programmes TV reçus (ici au nombre de 4), les programmes TV répondant aux critères de la requête. Un ensemble limité de programmes TV correspondant à la sélection de l'utilisateur est ainsi défini, chaque programme étant identifié par son champ d'identification id (cf. Tableau 1) issu de son descripteur de données. L'analyseur de requête envoie les identificateurs 339 au démultiplexeur 316 de sorte à ne démultiplexer que les signaux vidéo sous-échantillonnés correspondant à cet ensemble limité de programmes TV. Un ensemble limité de signaux vidéo sous-échantillonnés 317-320 encodés selon la norme MPEG-4 est délivré. Ici, 4 signaux vidéo sous-échantillonnés sont représentés, mais suivant le résultat de la requête utilisateur, un nombre inférieur de signaux peut être délivré. L'ensemble limité de signaux vidéo sous-échantillonnés 317-320 est décodé par le système de décodage 321 composé des décodeurs 322-325 selon la norme MPEG-4 délivrant les signaux vidéo sous-échantillonnés décodés 326-329. Ces signaux décodés sont alors assemblés sous forme de mosaïque au moyen d'un compositeur d'image 334, ce compositeur juxtaposant dans un même plan les différents signaux vidéo sous-échantillonnés. Lors de cette composition, des données additionnelles 337, correspondant aux champs 4-5-6-7 (cf. tableau 1) des descripteurs de données relatives à l'ensemble limité de signaux vidéo sous-échantillonnés, peuvent être insérées dans la mosaïque de programmes TV pour apporter un complément d'information à l'utilisateur qui regarde la mosaïque ainsi créée et affichée sur son poste de télévision, la mosaïque étant portée par le signal de sortie 335. L'utilisateur dispose donc d'une mosaïque de programmes TV satisfaisant son choix. Via l'interface utilisateur 312, l'utilisateur sélectionne le programme TV de format réduit (i.e. le signal vidéo sous-échantillonné) dans la mosaïque, par exemple à l'aide d'une télécommande munie de flèches de déplacement permettant de déplacer un curseur de sélection d'un programme de format réduit à un autre dans la mosaïque et d'une touche de validation permettant de sélectionner le programme de format réduit où se trouve le curseur de sélection. Suite à cette action 336, l'analyseur 314 détermine l'identificateur du programme TV de format réduit sélectionné par l'utilisateur, et l'envoie via 338 vers le démultiplexeur 330. Parmi l'ensemble des programmes TV contenus dans le signal 303, le démultiplexeur 330 démultiplexe et délivre le signal 331 correspondant à l'identificateur 338. Un décodeur 332 selon la norme MPEG-2 décode le signal 331 et délivre le signal décodé 333 correspondant au programme TV sélectionné par l'utilisateur. Ce programme TV remplace alors la mosaïque de programme sur le poste de télévision de l'utilisateur.

Dans un autre mode de réalisation, la sélection des signaux vidéo sous-échantillonnés composant la mosaïque est faite de façon directe par l'utilisateur, sans avoir à choisir un genre de programme TV parmi un menu. Pour cela, l'utilisateur sélectionne les uns après les autres les programmes qu'il désire faire figurer dans sa mosaïque préférée, parmi l'ensemble de tous les programmes TV contenus dans le signal 301. Un nouveau champ "pref_mosaïque" est alors ajouté dans chaque descripteur de données qui est validé pour indiquer qu'un signal vidéo sous-échantillonné devra être utilisé lors de la création de la mosaïque préférée de l'utilisateur. De cette manière, l'utilisateur créée son propre profil utilisateur qui peut être mémorisé localement. Lorsque l'utilisateur souhaite sélectionner un programme TV particulier, une action utilisateur 340 (via une touche de télécommande, menu ...) entraîne la recherche par 314 dans la base de données 315 de tous les descripteurs dont le champ pref_mosaïque est validé, ce qui permet de définir l'ensemble limité de signaux vidéo sous-échantillonnés constituant la mosaïque préférée de l'utilisateur, cette dernière étant créée et affichée comme décrit précédemment. L'utilisateur n'a plus qu'à sélectionner dans sa mosaïque préférée le programme TV qu'il souhaite afficher sur son poste de télévision.

Afin de proposer à l'utilisateur une mosaïque de programmes TV actualisée tenant compte des changements de programme qui peuvent survenir sur une chaîne donnée, une mise à jour de la base de données 315 est effectuée, de façon continue ou périodiquement. Pour cela, le générateur de base de données 310 vérifie, pour chaque programme TV identifié par son identificateur de programme 311, si les champs de son descripteur de données associé et précédemment stockés dans la base de données 315 sont identiques aux champs 307-309 reçus à l'instant présent. Si c'est le cas, la base de données 315 n'est pas mise à jour puisque les programmes TV reçus sont identiques, en particulier dans leur genre. Dans le cas contraire, une mise à jour de la base 315 est faite en remplaçant les champs des descripteurs de données précédemment stockés par les nouveaux champs 307-309 reçus. Par exemple, une mise à jour de la base de données 315 est faite si une chaîne de télévision, repérée par son identificateur de programme 311, se met à diffuser un documentaire alors qu'un film était jusqu'à présent diffusé.

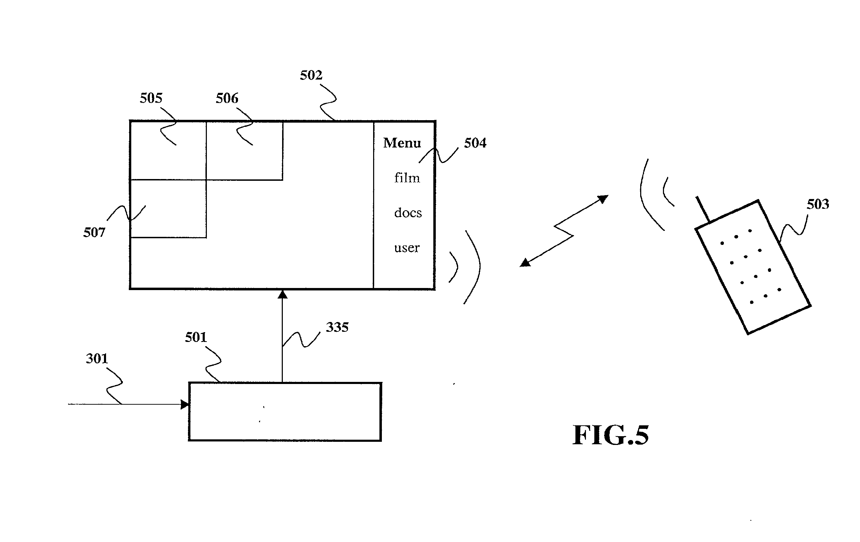

La figure 5 illustre un système de réception et de traitement vidéo selon l'invention implémenté dans un boîtier de réception 501, notamment de type set-top box. Ce boîtier reçoit le signal 301 tel que décrit précédemment et génère en sortie le signal 335 véhiculant notamment la mosaïque de programme TV et/ou le programme TV sélectionné par l'utilisateur affichés sur le poste de télévision 502 de l'utilisateur. L'utilisateur dispose d'une télécommande 503 permettant d'interagir avec le contenu vidéo/graphique affichée sur le poste 502.
La zone d'affichage comprend une zone 504 permettant d'afficher un menu dans lequel l'utilisateur choisit le genre de programme TV qu'il souhaite regarder. Par exemple, il choisira l'intitulé "film" s'il désire regarder un programme TV correspondant à un film, ou l'intitulé "docs" s'il désire regarder un programme TV correspondant à un documentaire. Un sous-menu (non représenté) peut également être envisagé pour proposer des sous-genres à l'utilisateur. En réponse à ce choix, le système 501 construit une mosaïque de programmes avec les signaux vidéo sous-échantillonnés répondant au choix de l'utilisateur. Cette mosaïque est affichée sur le poste 502. A titre d'exemple, une mosaïque de programmes TV est constituée de 3 signaux vidéo sous-échantillonnés 505-506-507. L'utilisateur peut ainsi sélectionner parmi cette mosaïque le programme TV qu'il regardera.
Dans le menu 504, un intitulé "user" permet à l'utilisateur de faire appel à une mosaïque utilisateur comme définie et décrite à la figure 3.

Concernant la mise en oeuvre sur le plan matériel d'une telle invention, il sera notamment fait appel tant au niveau du système de transmission que du système de réception/traitement à des processeurs de signaux exécutant un programme d'ordinateur comprenant une suite d'instructions de code de programme pour réaliser la fonction des moyens décrits aux figures 1 à 5, lesdits jeux d'instructions étant stockés en mémoire. En particulier, ces jeux d'instructions seront issus de la compilation d'un ou plusieurs programmes sources mettant en oeuvre les différentes étapes de traitement de l'invention.

## Revendications

1. Système de transmission vidéo pour transmettre sur un canal de communication un signal vidéo de sortie à partir d'un ensemble de signaux vidéo d'entrée, ledit système comprenant un premier ensemble de moyens de codage pour délivrer un signal vidéo codé selon la norme MPEG-2 de chaque signal vidéo d'entrée,
**caractérisé en ce qu'**il comprend aussi :
- un second ensemble de moyens de codage pour délivrer un signal vidéo sous-échantillonné et codé selon la norme MPEG-4 pour chacun desdits signaux vidéo d'entrée;
- des moyens d'association pour associer à chaque signal vidéo sous-échantillonné et codé selon la norme MPEG-4 un descripteur comprenant un champ identificateur et un champ filtrage caractérisant le signal vidéo d'entrée correspondant, suivant son genre;
- des moyens de multiplexage pour multiplexer l'ensemble desdits signaux vidéo codés selon la norme MPEG-2, avec l'ensemble desdits signaux vidéo sous-échantillonnés et codé selon la norme MPEG-4 associés à leur descripteur, ce multiplexage délivrant ledit signal vidéo de sortie.

2. Système de transmission vidéo pour transmettre sur un canal de communication un signal vidéo de sortie à partir d'un signal vidéo d'entrée, ledit signal vidéo d'entrée résultant du multiplexage d'un ensemble de signaux vidéo codés selon la norme MPEG-2, ledit système comprenant des moyens de démultiplexage pour générer lesdits signaux vidéo codés selon la norme MPEG-2,
**caractérisé en ce qu'**il comprend aussi :
- des moyens de transcodage pour délivrer un signal vidéo sous-échantillonné et codé selon la norme MPEG-4 pour chacun desdits signaux vidéo codé selon la norme MPEG-2,
- des moyens d'association pour associer à chaque signal vidéo sous-échantillonné et codé selon la norme MPEG-4 un descripteur comprenant un champ identificateur et un champ filtrage caractérisant le signal vidéo codé correspondant, suivant son genre;
- des moyens de multiplexage pour multiplexer ledit signal vidéo d'entrée, avec l'ensemble desdits signaux vidéo sous-échantillonnés et codé selon la norme MPEG-4 associés à leur descripteur, ce multiplexage délivrant ledit signal vidéo de sortie.

3. Système de traitement vidéo pour notamment recevoir, via un canal de communication, un signal vidéo d'entrée résultant du multiplexage d'un ensemble de signaux vidéo codés selon la norme MPEG-2, ledit système comprenant des moyens de démultiplexage pour générer lesdits signaux vidéo codés, des moyens de décodage pour décoder lesdits signaux vidéo codés et générer des signaux vidéo décodés visualisables sur un écran,
**caractérisé en ce qu'**il comprend aussi :
- des moyens de réception d'un signal auxiliaire résultant du multiplexage d'un ensemble de signaux vidéo sous-échantillonnés et codé selon la norme MPEG-4, chaque signal vidéo sous-échantillonné et codé selon la norme MPEG-4 résultant du sous-échantillonnage et codage d'un signal vidéo codé selon la norme MPEG-2, un descripteur de données étant associé à chaque signal sous-échantillonné et codé selon la norme MPEG-4 pour le caractériser par un ensemble de champs, comprenant un champ identificateur et un champ filtrage caractérisant le signal vidéo codé, suivant son genre;
- des moyens de création d'une base de données pour stocker les champs desdits descripteurs de données, et identifier un signal vidéo sous-échantillonné et codé selon la norme MPEG-4 au moyen d'une requête portant sur un ensemble de champs;
- des moyens de création d'une représentation mosaïque à partir d'un ensemble limité de signaux vidéo sous-échantillonnés et codé selon la norme MPEG-4 sélectionnés parmi ledit ensemble de signaux vidéo sous-échantillonnés et codé selon la norme MPEG-4, lesdits signaux vidéo sous-échantillonnés et codé selon la norme MPEG-4 sélectionnés correspondant aux signaux vidéo sous-échantillonnés et codé selon la norme MPEG-4 dont les champs des descripteurs associés sont le résultat d'une requête utilisateur envoyée à ladite base de données.

4. Système de traitement vidéo selon la revendication 3 **caractérisé en ce que** les moyens de création de ladite mosaïque incluent
- des moyens de démultiplexage dudit signal auxiliaire pour générer lesdits signaux vidéo sous-échantillonnés et codé selon la norme MPEG-4 sélectionnés,
- des moyens de décodage pour générer un signal vidéo sous-échantillonné décodé de chaque signal vidéo sous-échantillonné et codé selon la norme MPEG-4 sélectionné,
- des moyens de composition vidéo pour composer ladite mosaïque à partir des signaux vidéo sous-échantillonnés décodés, ladite mosaïque étant visualisable sur ledit écran.

5. Système de traitement vidéo selon la revendication 4 **caractérisé en ce qu'**il comprend un générateur de requête pour générer ladite requête utilisateur, ladite requête utilisateur étant issue de la sélection par un utilisateur, dans un menu affiché sur ledit écran, d'un ensemble de champs.

6. Système de traitement vidéo selon la revendication 4 **caractérisé en ce que** la requête utilisateur est issue du contenu d'un profil utilisateur comprenant un ensemble de champs.

7. Système de traitement vidéo selon la revendication 4 **caractérisé en ce que** qu'il comprend des moyens de sélection graphique pour sélectionner ledit ensemble limité de signaux vidéo sous-échantillonnés décodés parmi ledit ensemble de signaux vidéo sous-échantillonnés décodés visualisés sur ledit écran.

8. Système de traitement vidéo selon la revendication 5 à 7 **caractérisé en ce que** qu'il comprend des moyens de sélection d'un signal vidéo sous-échantillonné décodés composant ladite représentation mosaïque affichée, pour permettre l'affichage plein écran dudit signal vidéo décodé correspondant.

9. Récepteur pour poste de télévision comportant un système de traitement vidéo selon la revendication 3.

10. Signal numérique composé d'un ensemble de signaux vidéo primaires codés selon la norme MPEG-2, **caractérisé en ce qu'**il comprend aussi un ensemble de signaux vidéo secondaires codés selon la norme MPEG-4, chaque signal vidéo secondaire étant obtenu successivement par sous-échantillonnage d'un signal vidéo primaire puis par encodage selon la norme MPEG-4, chaque signal vidéo MPEG-4 étant associé à un descripteur caractérisant le signal vidéo primaire correspondant, et comprenant un champ identificateur et un champ filtrage, suivant son genre.

11. Procédé de transmission vidéo pour transmettre sur un canal de communication un signal vidéo de sortie à partir d'un ensemble de signaux vidéo d'entrée, ledit procédé comprenant une première étape de codage pour délivrer un signal vidéo codé selon la norme MPEG-2 de chaque signal vidéo d'entrée,
**caractérisé en ce qu'**il comprend aussi :
- une seconde étape de codage pour délivrer un signal vidéo sous-échantillonné et codé selon la norme MPEG-4 pour chacun desdits signaux vidéo d'entrée,;
- une étape d'association pour associer à chaque signal vidéo sous-échantillonné et codé selon la norme MPEG-4 un descripteur comprenant un champ identificateur et un champ filtrage caractérisant le signal vidéo d'entrée correspondant" suivant son genre; une étape de multiplexage pour multiplexer l'ensemble desdits signaux vidéo codés selon la norme MPEG-2, avec l'ensemble desdits signaux vidéo sous-échantillonnés et codé selon la norme MPEG-4 associés à leur descripteur , ce multiplexage délivrant ledit signal vidéo de sortie.

12. Procédé de transmission vidéo pour transmettre sur un canal de communication un signal vidéo de sortie à partir d'un signal vidéo d'entrée, ledit signal vidéo d'entrée résultant du multiplexage d'un ensemble de signaux vidéo codés selon la norme MPEG-2, ledit système comprenant une étape de démultiplexage pour générer lesdits signaux vidéo codés selon la norme MPEG-2,
**caractérisé en ce qu'**il comprend aussi :
- une étape de transcodage pour délivrer un signal vidéo sous-échantillonné codé selon la norme MPEG-4 pour chacun desdits signaux vidéo codé selon la norme MPEG-2,
- une étape d'association pour associer à chaque signal vidéo sous-échantillonné et codé selon la norme MPEG-4 un descripteur comprenant un champ identificateur et un champ filtrage caractérisant le signal vidéo codé correspondant, suivant son genre;
- une étape de multiplexage pour multiplexer ledit signal vidéo d'entrée, avec l'ensemble desdits signaux vidéo sous-échantillonnés et codé selon la norme MPEG-4 associés à leur descripteur, ce multiplexage délivrant ledit signal vidéo de sortie.

13. Procédé de traitement vidéo pour notamment recevoir un signal vidéo d'entrée résultant du multiplexage d'un ensemble de signaux vidéo codés selon la norme MPEG-2, ledit procédé comprenant une étape de démultiplexage pour générer lesdits signaux vidéo codés, une étape de décodage pour décoder lesdits signaux vidéo codés et générer des signaux vidéo décodés visualisables sur un écran, procédé **caractérisé en ce qu'**il comprend aussi :
- une étape de réception d'un signal auxiliaire résultant du multiplexage d'un ensemble de signaux vidéo sous-échantillonnés et codé selon la norme MPEG-4, chaque signal vidéo sous-échantillonné et codé selon la norme MPEG-4 résultant du sous-échantillonnage et codage d'un signal vidéo codé selon la norme MPEG-2, un descripteur de données étant associé à chaque signal sous-échantillonné et codé selon la norme MPEG-4 pour le caractériser par un ensemble de champs, comprenant un champ identificateur et un champ filtrage caractérisant le signal vidéo codé, suivant son genre;
- une étape de création d'une base de données pour stocker les champs desdits descripteurs de données, et identifier un signal vidéo sous-échantillonné et codé selon la norme MPEG-4 au moyen d'une requête portant sur un ensemble de champs,
- une étape de création d'une mosaïque à partir d'un ensemble limité de signaux vidéo sous-échantillonnés et codé selon la norme MPEG-4 sélectionnés parmi ledit ensemble de signaux vidéo sous-échantillonnés et codé selon la norme MPEG-4, lesdits signaux vidéo sous-échantillonnés et codé selon la norme MPEG-4 sélectionnés correspondant aux signaux vidéo sous-échantillonnés et codé selon la norme MPEG-4 dont les champs des descripteurs associés sont le résultat d'une requête utilisateur envoyée à ladite base de données.

14. Produit programme d'ordinateur pour un système de transmission vidéo pour transmettre sur un canal de communication un signal vidéo de sortie à partir d'un ensemble de signaux vidéo d'entrée, ledit programme d'ordinateur comprenant:
une suite d'instructions de code de programme pour l'exécution d'une première étape de codage pour délivrer un signal vidéo codé selon la norme MPEG-2 de chaque signal vidéo d'entrée ;
une suite d'instructions de code de programme pour l'exécution d'une seconde étape de codage pour délivrer un signal vidéo sous-échantillonné et codé selon la norme MPEG-4 pour chacun desdits signaux vidéo d'entrée;
une suite d'instructions de code de programme pour l'exécution d'une étape d'association pour associer à chaque signal vidéo sous-échantillonné et codé selon la norme MPEG-4 un descripteur comprenant un champ identificateur et un champ filtrage caractérisant le signal vidéo d'entrée correspondant, suivant son genre; et
une suite d'instructions de code de programme pour l'exécution d'une étape de multiplexage pour multiplexer l'ensemble desdits signaux vidéo codés selon la norme MPEG-2, avec l'ensemble desdits signaux vidéo sous-échantillonnés et codé selon la norme MPEG-4 associés à leur descripteur, ce multiplexage délivrant ledit signal vidéo de sortie.

15. Produit programme d'ordinateur pour un système de transmission vidéo pour transmettre sur un canal de communication un signal vidéo de sortie à partir d'un signal vidéo d'entrée, ledit signal vidéo d'entrée résultant du multiplexage d'un ensemble de signaux vidéo codés selon la norme MPEG-2, ledit programme d'ordinateur comprenant:
une suite d'instructions de code de programme pour l'exécution une étape de démultiplexage pour générer lesdits signaux vidéo codés selon la norme MPEG-2;
une suite d'instructions de code de programme pour l'exécution d'une étape de transcodage pour délivrer un signal vidéo sous-échantillonné et codé selon la norme MPEG-4 pour chacun desdits signaux vidéo codé selon la norme MPEG-2;
une suite d'instructions de code de programme pour l'exécution d'une étape d'association pour associer à chaque signal vidéo sous-échantillonné et codé selon la norme MPEG-4 un descripteur comprenant un champ identificateur et un champ filtrage caractérisant le signal vidéo codé correspondant, suivant son genre;
une suite d'instructions de code de programme pour l'exécution d'une étape de multiplexage pour multiplexer ledit signal vidéo d'entrée, avec l'ensemble desdits signaux vidéo sous-échantillonnés et codé selon la norme MPEG-4 associés à leur descripteur, ce multiplexage délivrant ledit signal vidéo de sortie.

16. Produit programme d'ordinateur pour un système de traitement vidéo pour notamment recevoir un signal vidéo d'entrée résultant du multiplexage d'un ensemble de signaux vidéo codés selon la norme MPEG-2, ledit programme d'ordinateur comprenant :
une suite d'instructions de code de programme pour l'exécution d'une étape de démultiplexage pour générer lesdits signaux vidéo codés, et une étape de décodage pour décoder lesdits signaux vidéo codés et générer des signaux vidéo décodés visualisables sur un écran;
une suite d'instructions de code de programme pour l'exécution d'une étape de réception d'un signal auxiliaire résultant du multiplexage d'un ensemble de signaux vidéo sous-échantillonnés et codé selon la norme MPEG-4, chaque signal vidéo sous-échantillonné et codé selon la norme MPEG-4 résultant du sous-échantillonnage et codage d'un signal vidéo codé selon la norme MPEG-2, un descripteur de données étant associé à chaque signal sous-échantillonné et codé selon la norme MPEG-4 pour le caractériser par un ensemble de champs, comprenant un champ identificateur et un champ filtrage caractérisant le signal vidéo codé, suivant son genre;
une suite d'instructions de code de programme pour l'exécution d'une étape de création d'une base de données pour stocker les champs desdits descripteurs de données, et identifier un signal vidéo sous-échantillonné et codé selon la norme MPEG-4 au moyen d'une requête portant sur un ensemble de champs; et
une suite d'instructions de code de programme pour l'exécution d'une étape de création d'une mosaïque à partir d'un ensemble limité de signaux vidéo sous-échantillonnés et codé selon la norme MPEG-4 sélectionnés parmi ledit ensemble de signaux vidéo sous-échantillonnés et codé selon la norme MPEG-4, lesdits signaux vidéo sous-échantillonnés et codé selon la norme MPEG-4 sélectionnés correspondant aux signaux vidéo sous-échantillonnés et codé selon la norme MPEG-4 dont les champs des descripteurs associés sont le résultat d'une requête utilisateur envoyée à ladite base de données

## Claims

1. A video transmission system for transmitting an output video signal on a communication channel from among a group of input video signals, said system comprising a first group of coding means to supply a video signal coded according to the MPEG-2 standard from each input video signal, **characterised in that** it further comprises:
- a second group of coding means for supplying a sub-sampled video signal and coded according to the MPEG-4 standard for each input video signal;
- association means for associating with each sub-sampled video signal and coded according to the MPEG-4 standard a descriptor comprising an identification field and a filtering field characterising the corresponding input video signal, according to its type;
- multiplexing means for multiplexing the group of said video signals coded according to the MPEG-2 standard with the group of said sub-sampled video signals coded according to the MPEG-4 standard associated with their descriptors, this multiplexing supplying said output video signal.

2. A video transmission system for transmitting an output video signal on a communication channel from an input video signal, the said input video signal resulting from the multiplexing of a group of video signals coded according to the MPEG-2 standard, said system comprising demultiplexing means for generating said video signals coded according to the MPEG-2 standard, **characterised in that** it further comprises:
- transcoding means for supplying a sub-sampled video signal and coded according to the MPEG-4 standard for each of said video signal coded according to the MPEG-2 standard,
- association means for associating with each sub-sampled video signal and coded according to the MPEG-4 standard a descriptor comprising an identification field and a filtering field characterising the corresponding coded video signal, according to its type;
- multiplexing means for multiplexing said input video signal with the group of said sub-sampled video signals and coded according to the MPEG-4 standard associated with their descriptors, this multiplexing supplying said output video signal.

3. A video processing system for receiving, via a communication channel, an input video signal resulting from the multiplexing of a group of video signals coded according to the MPEG-2 standard, said system comprising demultiplexing means for generating said coded video signals, decoding means for decoding said coded video signals and to generate decoded video signals that can be displayed on a screen, **characterised in that** it further comprises:
- means for receiving an auxiliary signal resulting from the multiplexing of a group of sub-sampled video signals and coded according to the MPEG-4 standard, each sub-sampled video signal and coded according to the MPEG-4 standard resulting from the sub-sampling and the coding of a video signal coded according to the MPEG-2 standard, a data descriptor being associated with each sub-sampled signal and coded according to the MPEG-4 standard to characterise it by means of a group of fields comprising an identification field and a filtering field characterising the coded video signal according to its type;
- means for creating a database to store the fields of said data descriptors and to identify a sub-sampled video signal and coded according to the MPEG-4 standard by means of a request referring to a group of fields;
- means for creating a mosaic representation from a limited group of sub-sampled video signals and coded according to the MPEG-4 standard selected from said group of sub-sampled video signals and coded according to the MPEG-4 standard, said selected sub-sampled video signals and coded according to the MPEG-4 standard corresponding to the sub-sampled video signals and coded according to the MPEG-4 standard for which the fields of the associated descriptors are the result of a user request sent to said database.

4. A video processing system according to Claim 3 **characterised in that** the means for creating said mosaic include:
- means for demultiplexing said auxiliary signal to generate said selected sub-sampled video signals and coded according to the MPEG-4 standard,
- decoding means for generating a decoded sub-sampled video signal from each selected sub-sampled video signal and coded according to the MPEG-4 standard,
- video composition means for composing said mosaic from the decoded sub-sampled video signals, said mosaic being capable of being displayed on said screen.

5. A video processing system according to Claim 4 **characterised in that** it comprises a request generator to generate said user request, said user request originating from the selection by a user, from a menu displayed on the said screen, of a group of fields.

6. A video processing system according to Claim 4 **characterised in that** the user request originates from the content of a user profile comprising a group of fields.

7. A video processing system according to Claim 4 **characterised in that** it comprises graphic selection means for selecting said limited group of sub-sampled video signals from among said group of sub-sampled video signals displayed on the screen.

8. A video processing system according to any one of Claims 5 to 7 **characterised in that** it comprises means for selecting a sub-sampled video signal composing said displayed mosaic representation, to effect full screen display of the corresponding decoded video signal.

9. A receiver for a television set comprising a video processing system according to Claim 3.

10. A digital signal composed from a group of primary video signals encoded in accordance with the MPEG-2 standard, **characterised in that** it further comprises a group of secondary video signals encoded in accordance with the MPEG-4 standard, each secondary video signal being obtained successively by sub-sampling a primary video signal then by encoding according to the MPEG-4 standard, each MPEG-4 video signal being associated with a descriptor characterising the corresponding primary video signal, and comprising an identification field and a filtering field, according to its type.

11. A video transmission process for transmitting an output video signal on a communication channel from among a group of input video signals, said process comprising a first encoding step for supplying an video signal coded according to the MPEG-2 standard from each input video signal, **characterised in that** it further comprises:
- a second encoding step for supplying a sub-sampled video signal and coded according to the MPEG-4 standard for each input video signal;
- an association step for associating with each sub-sampled video signal and coded according to the MPEG-4 standard a descriptor comprising an identification field and a filtering field characterising the corresponding input video signal according to its type;
- a multiplexing step for multiplexing the group of said video signals coded according to the MPEG-2 standard, with the group of said sub-sampled video signals coded according to the MPEG-4 standard associated with their descriptor, this multiplexing supplying said output video signal.

12. A video transmission process for transmitting an output video signal on a communication channel from an input video signal, said input video signal resulting from the multiplexing of a group of video signals coded according to the MPEG-2 standard, said system comprising a demultiplexing step for generating said video signals coded according to the MPEG-2 standard, **characterised in that** it further comprises:
- a transcoding step for providing a sub-sampled video signal coded according to the MPEG-4 standard for each video signal according to the MPEG-2 standard,
- an association step for associating with each sub-sampled video signal and coded according to the MPEG-4 standard a descriptor comprising an identification field and a filtering field characterising the corresponding encoded video signal according to its type;
- a multiplexing step for multiplexing said input video signal, with the group of said sub-sampled video signals and coded according to the MPEG-4 standard associated with the descriptors, the multiplexing supplying said output video signal.

13. A video processing method for receiving an input video signal resulting from the multiplexing of a group of video signals coded according to the MPEG-2 standard, said method comprising a demultiplexing step for generating said encoded video signals, a decoding step for decoding said encoded video signals and for generating decoded video signals which can be displayed on a screen, said method **characterised in that** it further comprises:
- a step for receiving an auxiliary signal resulting from the multiplexing of a group of sub-sampled video signals and coded according to the MPEG-4 standard, each sub-sampled video signal and coded according to the MPEG-4 standard resulting from the sub-sampling and the coding of an video signal coded according to the MPEG-2 standard, a data descriptor being associated with each sub-sampled signal and coded according to the MPEG-4 standard to characterise it by a group of fields comprising an identification field and a filtering field characterising the encoded video signal according to its type;
- a step for creating a database for storing the fields of said data descriptors and for identifying a sub-sampled video signal and coded according to the MPEG-4 standard by means of a request referring to a group of fields;
- a step for creating a mosaic representation from a limited group of sub-sampled video signals and coded according to the MPEG-4 standard selected from among said group of sub-sampled video signals and coded according to the MPEG-4 standard, said selected sub-sampled video signals and coded according to the MPEG-4 standard corresponding to the sub-sampled video signals and coded according to the MPEG-4 standard for which the fields of the associated descriptors are the result of a user request sent to said database.

14. A computer program for a video transmission system for transmitting an output video signal on a communication channel from a group of input video signals, said computer program comprising:
- a series of program code instructions for executing a first encoding step for providing a video signal coded according to the MPEG-2 standard from each input video signal;
- a series of program code instructions for executing a second encoding step for providing a sub-sampled video signal and coded according to the MPEG-4 standard for each input video signal;
- a series of program code instructions for executing an association step for associating with each sub-sampled video signal coded according to the MPEG-4 standard a descriptor comprising an identification field and a filtering field characterising the corresponding input video signal, according to its type; and
- a series of program code instructions for executing a multiplexing step for multiplexing the group of said video signals coded according to the MPEG-2 standard with the group of said sub-sampled video signals coded according to the MPEG-4 standard associated with their descriptors, this multiplexing supplying said output video signal.

15. A computer program for a video transmission system for transmitting an output video signal on a communication channel from an input video signal, said input video signal resulting from the multiplexing of a group of video signals coded according to the MPEG-2 standard, said computer program comprising:
- a series of program code instructions for executing a demultiplexing step for generating said video signals coded according to the MPEG-2 standard;
- a series of program code instructions for executing a transcoding step for providing a sub-sampled video signal coded according to the MPEG-4 standard for each video signal coded according to the MPEG-2 standard;
- a series of program code instructions for executing an association step for associating with each sub-sampled video signal coded according to the MPEG-4 standard a descriptor comprising an identification field and a filtering field characterising the corresponding coded video signal, according to its type;
- a series of program code instructions for executing a multiplexing step for multiplexing said input video signal with a group of said sub-sampled video signals and coded according to the MPEG-4 standard associated with their descriptors, this multiplexing supplying said output video signal.

16. A computer program for a video processing system for receiving an input video signal resulting from the multiplexing of a group of video signals coded according to the MPEG-2 standard, said computer program comprising:
- a series of program code instructions for executing a demultiplexing step for generating said encoded video signals, and a decoding step for decoding said encoded video signals and generating decoded video signals capable of being displayed on a screen;
- a series of program code instructions for executing a step for receiving an auxiliary signal resulting from the multiplexing of a group of sub-sampled video signals and coded according to the MPEG-4 standard, each sub-sampled video signal and coded according to the MPEG-4 standard resulting from the sub-sampling and the coding of an video signal coded according to the MPEG-2 standard, a data descriptor being associated with each sub-sampled signal and coded according to the MPEG-4 standard for characterising it by a group of fields, comprising an identification field and a filtering field characterising the coded video signal, according to its type;
- a series of program code instructions for executing a step for creating a database for storing the fields of said data descriptors, and for identifying a sub-sampled video signal coded according to the MPEG-4 standard by means of a request referring to a group of fields; and
- a series of program code instructions for executing a step of creating a mosaic from a limited group of sub-sampled video signals and coded according to the MPEG-4 standard selected from said group of sub-sampled video signals and coded according to the MPEG-4 standard, said selected sub-sampled signals and coded according to the MPEG-4 standard corresponding to the sub-sampled video signals and coded according to the MPEG-4 standard for which the fields of the associated descriptors are the result of a user request sent to said database.

## Patentansprüche

1. Videoübertragungssystem, um ein Videoausgangssignal aus einer Gruppe von Videoeingangssignalen über einen Kommunikationskanal zu übertragen, wobei das System eine erste Gruppe von Codiereinrichtungen umfasst, um ein nach dem Standard MPEG-2 codiertes Videosignal von jedem Videoeingangssignal zu liefern,
**dadurch gekennzeichnet, dass** es auch umfasst:
- eine zweite Gruppe von Codiereinrichtungen, um ein unterabgetastetes und nach dem Standard MPEG-4 codiertes Videosignal für jedes der Videoeingangssignale zu liefern;
- Assoziierungseinrichtungen, um jedes unterabgetastete und nach dem Standard MPEG-4 codierte Videosignal mit einem Descriptor zu assoziieren, der ein Kennungsfeld und ein Filterungsfeld umfasst, die das entsprechende Videoeingangssignal je nach seiner Art kennzeichnen;
- Multiplexierungseinrichtungen, um die Gruppe der nach dem Standard MPEG-2 codierten Videosignale mit der Gruppe der mit ihrem Descriptor assoziierten, unterabgetasteten und nach dem Standard MPEG-4 codierten Videosignale zu multiplexieren, wobei diese Multiplexierung das Videoausgangssignal liefert.

2. Videoübertragungssystem, um ein Videoausgangssignal aus einem Videoeingangssignal über einen Kommunikationskanal zu übertragen, wobei das Videoeingangssignal aus der Multiplexierung einer Gruppe von nach dem Standard MPEG-2 codierten Videosignalen stammt, wobei das System Demultiplexierungseinrichtungen umfasst, um die nach dem Standard MPEG-2 codierten Videosignale zu generieren, **dadurch gekennzeichnet, dass** es auch umfasst:
- Transcodierungseinrichtungen, um ein unterabgetastetes und nach dem Standard MPEG-4 codiertes Videosignal für jedes der nach dem Standard MPEG-2 codierten Videosignale zu liefern,
- Assoziierungseinrichtungen, um jedes unterabgetastete und nach dem Standard MPEG-4 codierte Videosignal mit einem Descriptor zu assoziieren, der ein Kennungsfeld und ein Filterungsfeld umfasst, die das entsprechende codierte Videoeingangssignal je nach seiner Art kennzeichnen;
- Multiplexierungseinrichtungen, um das Videoeingangssignal mit der Gruppe der mit ihrem Descriptor assoziierten, unterabgetasteten und nach dem Standard MPEG-4 codierten Videosignale zu multiplexieren, wobei diese Multiplexierung das Videoausgangssignal liefert.

3. Videoverarbeitungssystem, um insbesondere über einen Kommunikationskanal ein Videoeingangssignal zu empfangen, das aus der Multiplexierung einer Gruppe von nach dem Standard MPEG-2 codierten Videosignalen stammt, wobei das System Demultiplexierungseinrichtungen zum Generieren der codierten Videosignale, Decodierungseinrichtungen zum Decodieren der codierten Videosignale und zum Generieren von decodierten Videosignalen umfasst, die auf einem Bildschirm sichtbar gemacht werden können,
**dadurch gekennzeichnet, dass** es auch umfasst:
- Empfangseinrichtungen für ein Hilfssignal, das aus der Multiplexierung einer Gruppe von unterabgetasteten und nach dem Standard MPEG-4 codierten Videosignalen stammt, wobei jedes unterabgetastete und nach dem Standard MPEG-4 codierte Videosignal von der Unterabtastung und Codierung eines nach dem Standard MPEG-2 codierten Videosignals stammt, wobei ein Datendescriptor mit jedem unterabgetasteten und nach dem Standard MPEG-4 codierten Videosignal assoziiert ist, um es durch einen Satz von Feldern zu kennzeichnen, die ein Kennungsfeld und ein Filtrierungsfeld umfassen, die das codierte Videosignal je nach seiner Art kennzeichnen;
- Einrichtungen zur Erstellung einer Datenbank, um die Felder der Datendescriptoren zu speichern und ein unterabgetastetes und nach dem Standard MPEG-4 codiertes Videosignal mittels einer Abfrage zu identifizieren, die sich auf einen Satz von Feldern bezieht;
- Einrichtungen zur Erstellung einer Mosaikdarstellung aus einer begrenzten Gruppe unterabgetasteter und nach dem Standard MPEG-4 codierter Videosignale, die aus der Gruppe unterabgetasteter und nach dem Standard MPEG-4 codierter Videosignale ausgewählt sind, wobei die unterabgetasteten und nach dem Standard MPEG-4 codierten Videosignale entsprechend den unterabgetasteten und nach dem Standard MPEG-4 codierten Videosignalen ausgewählt sind, deren Felder der assoziierten Descriptoren das Ergebnis einer an die Datenbank geschickten Benutzerabfrage sind.

4. Videoverarbeitungssystem nach Anspruch 3, **dadurch gekennzeichnet, dass** die Einrichtungen zur Erstellung des Mosaiks umfassen:
- Demultiplexierungseinrichtungen für das Hilfssignal, um die ausgewählten, unterabgetasteten und nach dem Standard MPEG-4 codierten Videosignale zu generieren,
- Decodierungseinrichtungen, um ein unterabgetastetes, decodiertes Videosignal von jedem ausgewählten, unterabgetasteten Videosignal zu generieren und nach dem ausgewählten Standard MPEG-4 zu codieren,
- Videozusammensetzungseinrichtungen, um das Mosaik aus den unterabgetasteten, decodierten Videosignalen zusammenzusetzen, wobei das Mosaik auf dem Bildschirm sichtbar gemacht werden kann.

5. Videoverarbeitungssystem nach Anspruch 4, **dadurch gekennzeichnet, dass** es einen Abfragegenerator umfasst, um die Benutzerabfrage zu generieren, wobei die Benutzerabfrage aus der durch einen Benutzer getätigten Auswahl aus einem am Bildschirm angezeigten Menü eines Satzes von Feldern ausgegeben wird.

6. Videoverarbeitungssystem nach Anspruch 4, **dadurch gekennzeichnet, dass** die Benutzerabfrage aus dem Inhalt eines einen Satz von Feldern umfassenden Benutzerprofils ausgegeben wird.

7. Videoverarbeitungssystem nach Anspruch 4, **dadurch gekennzeichnet, dass** es Einrichtungen zur grafischen Auswahl umfasst, um die begrenzte Gruppe unterabgetasteter, decodierter Videosignale aus der Gruppe von am Bildschirm sichtbar gemachten, unterabgetasteten, decodierten Videosignalen auszuwählen.

8. Videoverarbeitungssystem nach den Ansprüchen 5 bis 7, **dadurch gekennzeichnet, dass** es Auswahleinrichtungen für ein unterabgetastetes decodiertes Videosignal umfasst, das einen Bestandteil der angezeigten Mosaikdarstellung bildet, um die Vollbildschirmanzeige des entsprechenden decodierten Videosignals zu ermöglichen.

9. Empfänger für ein Fernsehgerät, der ein Videoverarbeitungssystem nach Anspruch 3 umfasst.

10. Digitales Signal, das sich aus einer Gruppe von primären Videosignalen zusammensetzt, die nach dem Standard MPEG-2 codiert sind, **dadurch gekennzeichnet, dass** es auch eine Gruppe von sekundären Videosignale umfasst, die nach dem Standard MPEG-4 codiert sind, wobei jedes sekundäre Videosignal sukzessive durch Unterabtastung eines primären Videosignals mit anschließender Codierung nach dem Standard MPEG-4 erhalten wird, wobei jedes MPEG-4-Videosignal mit einem Descriptor assoziiert wird, der das entsprechende primäre Videosignal je nach seiner Art kennzeichnet, und ein Kennungsfeld und ein Filterungsfeld umfasst.

11. Videoübertragungsverfahren, um ein Videoausgangssignal aus einer Gruppe von Videoeingangssignalen über einen Kommunikationskanal zu übertragen, wobei das Verfahren einen ersten Schritt des Codierens umfasst, um ein nach dem Standard MPEG-2 codiertes Videosignal von jedem Videoeingangssignal zu liefern,
**dadurch gekennzeichnet, dass** es auch umfasst:
- einen zweiten Schritt des Codierens, um ein unterabgetastetes und nach dem Standard MPEG-4 codiertes Videosignal für jedes der Videoeingangssignale zu liefern;
- einen Schritt des Assoziierens, um jedes unterabgetastete und nach dem Standard MPEG-4 codierte Videosignal mit einem Descriptor zu assoziieren, der ein Kennungsfeld und ein Filterungsfeld umfasst, die das entsprechende Videoeingangssignal je nach seiner Art kennzeichnen;
- einen Schritt des Multiplexierens, um die Gruppe der nach dem Standard MPEG-2 codierten Videosignale mit der Gruppe der mit ihrem Descriptor assoziierten, unterabgetasteten und nach dem Standard MPEG-4 codierten Videosignale zu multiplexieren, wobei diese Multiplexierung das Videoausgangssignal liefert.

12. Videoübertragungsverfahren, um ein Videoausgangssignal aus einem Videoeingangssignal über einen Kommunikationskanal zu übertragen, wobei das Videoeingangssignal aus der Multiplexierung einer Gruppe von nach dem Standard MPEG-2 codierten Videosignalen stammt, wobei das Verfahren einen Schritt des Demultiplexierens umfasst, um die nach dem Standard MPEG-2 codierten Videosignale zu generieren,
**dadurch gekennzeichnet, dass** es auch umfasst:
- einen Schritt des Transcodierens, um ein unterabgetastetes und nach dem Standard MPEG-4 codiertes Videosignal für jedes der nach dem Standard MPEG-2 codierten Videosignale zu liefern,
- einen Schritt des Assoziierens, um jedes unterabgetastete und nach dem Standard MPEG-4 codierte Videosignal mit einem Descriptor zu assoziieren, der ein Kennungsfeld und ein Filterungsfeld umfasst, die das entsprechende codierte Videoeingangssignal je nach seiner Art kennzeichnen;
- einen Schritt des Multiplexierens, um das Videoeingangssignal mit der Gruppe der mit ihrem Descriptor assoziierten, unterabgetasteten und nach dem Standard MPEG-4 codierten Videosignale zu multiplexieren, wobei diese Multiplexierung das Videoausgangssignal liefert.

13. Videoverarbeitungsverfahren, um insbesondere ein Videoeingangssignal zu empfangen, das aus der Multiplexierung einer Gruppe von nach dem Standard MPEG-2 codierten Videosignalen stammt, wobei das Verfahren einen Schritt des Demultiplexierens zum Generieren der codierten Videosignale, einen Schritt des Decodierens zum Decodieren der codierten Videosignale und Generieren von decodierten Videosignalen umfasst, die auf einem Bildschirm sichtbar gemacht werden können, wobei das Verfahren **dadurch gekennzeichnet ist, dass** es auch umfasst:
- einen Schritt des Empfangens eines Hilfssignals, das aus der Multiplexierung einer Gruppe von unterabgetasteten und nach dem Standard MPEG-4 codierten Videosignalen stammt, wobei jedes unterabgetastete und nach dem Standard MPEG-4 codierte Videosignal aus der Unterabtastung und Codierung eines nach dem Standard MPEG-2 codierten Videosignals stammt, wobei ein Datendescriptor mit jedem unterabgetasteten und nach dem Standard MPEG-4 codierten Videosignal assoziiert wird, um es durch einen Satz von Feldern zu kennzeichnen, die ein Kennungsfeld und ein Filtrierungsfeld umfassen, die das codierte Videosignal je nach seiner Art kennzeichnen;
- einen Schritt des Erstellens einer Datenbank, um die Felder der Datendescriptoren zu speichern und ein unterabgetastetes und nach dem Standard MPEG-4 codiertes Videosignal mittels einer Abfrage zu identifizieren, die sich auf einen Satz von Feldern bezieht;
- einen Schritt des Erstellens eines Mosaiks aus einer begrenzten Gruppe unterabgetasteter und nach dem Standard MPEG-4 codierter Videosignale, die aus der Gruppe unterabgetasteter und nach dem Standard MPEG-4 codierter Videosignale ausgewählt sind, wobei die unterabgetasteten und nach dem Standard MPEG-4 codierten Videosignale entsprechend den unterabgetasteten und nach dem Standard MPEG-4 codierten Videosignalen ausgewählt werden, deren Felder der assoziierten Descriptoren das Ergebnis einer an die Datenbank geschickten Benutzerabfrage sind.

14. Computerprogrammprodukt für ein Videoübertragungssystem, um ein Videoausgangssignal aus einer Gruppe von Videoeingangssignalen über einen Kommunikationskanal zu übertragen, wobei das Computerprogrammprodukt umfasst:
eine Programmcodebefehlsfolge zur Ausführung eines ersten Schritts des Codierens, um ein nach dem Standard MPEG-2 codiertes Videosignal von jedem Videoeingangssignal zu liefern,
eine Programmcodebefehlsfolge zur Ausführung eines zweiten Schritt des Codierens, um ein unterabgetastetes und nach dem Standard MPEG-4 codiertes Videosignal für jedes der Videoeingangssignale zu liefern;
eine Programmcodebefehlsfolge zur Ausführung eines Schritts des Assoziierens, um jedes unterabgetastete und nach dem Standard MPEG-4 codierte Videosignal mit einem Descriptor zu assoziieren, der ein Kennungsfeld und ein Filterungsfeld umfasst, die das entsprechende Videoeingangssignal je nach seiner Art kennzeichnen; und
eine Programmcodebefehlsfolge zur Ausführung eines Schritts des Multiplexierens, um die Gruppe der nach dem Standard MPEG-2 codierten Videosignale mit der Gruppe der mit ihrem Descriptor assoziierten, unterabgetasteten und nach dem Standard MPEG-4 codierten Videosignale zu multiplexieren, wobei diese Multiplexierung das Videoausgangssignal liefert.

15. Computerprogrammprodukt für ein Videoübertragungssystem, um ein Videoausgangssignal aus einem Videoeingangssignal über einen Kommunikationskanal zu übertragen, wobei das Videoeingangssignal aus der Multiplexierung einer Gruppe von nach dem Standard MPEG-2 codierten Videosignalen stammt, wobei das Computerprogrammprodukt umfasst:
eine Programmcodebefehlsfolge zur Ausführung eines Schritts des Demultiplexierens, um die nach dem Standard MPEG-2 codierten Videosignale zu generieren;
eine Programmcodebefehlsfolge zur Ausführung eines Transcodierungsschritts, um ein unterabgetastetes und nach dem Standard MPEG-4 codiertes Videosignal für jedes der nach dem Standard MPEG-2 codierten Videosignale zu liefern,
eine Programmcodebefehlsfolge zur Ausführung eines Schritts des Assoziierens, um jedes unterabgetastete und nach dem Standard MPEG-4 codierte Videosignal mit einem Descriptor zu assoziieren, der ein Kennungsfeld und ein Filterungsfeld umfasst, die das entsprechende codierte Videoeingangssignal je nach seiner Art kennzeichnen;
eine Programmcodebefehlsfolge zur Ausführung eines Schritts des Multiplexierens, um das Videoeingangssignal mit der Gruppe der mit ihrem Descriptor assoziierten, unterabgetasteten und nach dem Standard MPEG-4 codierten Videosignale zu multiplexieren, wobei diese Multiplexierung das Videoausgangssignal liefert.

16. Computerprogrammprodukt für ein Videoverarbeitungssystem, um insbesondere ein Videoeingangssignal zu empfangen, das aus der Multiplexierung einer Gruppe von nach dem Standard MPEG-2 codierten Videosignalen stammt, wobei das Computerprogrammprodukt umfasst:
eine Programmcodebefehlsfolge zur Ausführung eines Schritts des Demultiplexierens zum Generieren der codierten Videosignale, und eines Schritts des Decodierens zum Decodieren der codierten Videosignale und Generieren von decodierten Videosignalen, die auf einem Bildschirm sichtbar gemacht werden können,
eine Programmcodebefehlsfolge zur Ausführung eines Schritts des Empfangens eines Hilfssignals, das aus der Multiplexierung einer Gruppe von unterabgetasteten und nach dem Standard MPEG-4 codierten Videosignalen stammt, wobei jedes unterabgetastete und nach dem Standard MPEG-4 codierte Videosignal aus der Unterabtastung und Codierung eines nach dem Standard MPEG-2 codierten Videosignals stammt, wobei ein Datendescriptor mit jedem unterabgetasteten und nach dem Standard MPEG-4 codierten Videosignal assoziiert wird, um es durch einen Satz von Feldern zu kennzeichnen, die ein Kennungsfeld und ein Filtrierungsfeld umfassen, die das codierte Videosignal je nach seiner Art kennzeichnen;
eine Programmcodebefehlsfolge zur Ausführung eines Schritts des Erstellens einer Datenbank, um die Felder der Datendescriptoren zu speichern und ein unterabgetastetes und nach dem Standard MPEG-4 codiertes Videosignal mittels einer Abfrage zu identifizieren, die sich auf einen Satz von Feldern bezieht; und
eine Programmcodebefehlsfolge zur Ausführung eines Schritts des Erstellens eines Mosaiks aus einer begrenzten Gruppe unterabgetasteter und nach dem Standard MPEG-4 codierter Videosignale, die aus der Gruppe unterabgetasteter und nach dem Standard MPEG-4 codierter Videosignale ausgewählt sind, wobei die unterabgetasteten und nach dem Standard MPEG-4 codierten Videosignale entsprechend den unterabgetasteten und nach dem Standard MPEG-4 codierten Videosignalen ausgewählt werden, deren Felder der assoziierten Descriptoren das Ergebnis einer an die Datenbank geschickten Benutzerabfrage sind.
